# EUROPÄISCHE PATENTSCHRIFT

(11) **EP 3 837 639 B1**
(45) Veröffentlichungstag und Bekanntmachung des Hinweises auf die Patenterteilung: **11.05.2022**
(21) Anmeldenummer: 20758203.2
(22) Anmeldetag: 19.08.2020
(51) Int. Cl.: G06K 19/077, G06K 19/07, A44C 9/00

(54) **RINGFÖRMIGER SCHMUCKGEGENSTAND MIT RFID-TRANSPONDER**
RING-SHAPED PIECE OF JEWELRY HAVING AN RFID TRANSPONDER
BIJOU EN FORME D'ANNEAU DOTÉ D'UN TRANSPONDEUR RFID

(30) Priorität: 07.11.2019 DE 102019130012
(43) Veröffentlichungstag der Anmeldung: 23.06.2021
(73) Patentinhaber: egf - Eduard G.Fidel GmbH, 75179 Pforzheim (DE)
(72) Erfinder: SCHIFFER, Stefan, 75180 Pforzheim (DE)
(74) Vertreter: Wacker, Jost Oliver
(86) Internationale Anmeldenummer: PCT/EP2020/073223
(87) Internationale Veröffentlichungsnummer: WO 2021/089211

(56) Entgegenhaltungen:
- WO-A1-2018/163876
- US-A1- 2015 042 450
- US-A1- 2017 373 671

## Beschreibung

Die Erfindung betrifft einen ringförmigen Schmuckgegenstand, wie beispielsweise einen Fingerring, einen Armreif oder einen Anhänger, nach dem Oberbegriff des Anspruchs 1 sowie ein Verfahren zur Herstellung des Schmuckgegenstandes und ein Verfahren zum Betrieb einer Ausleseanordnung mit einem solchen Schmuckgegenstand. Dabei weist der Schmuckgegenstand einen Metallgrundkörper auf, der eine Aufnahmeöffnung zur Festlegung des Schmuckgegenstandes an einem Körperteil des Trägers oder an einem weiteren Schmuckstück, wie beispielsweise einer Kette bildet. Zudem ist an dem Schmuckgegenstand ein RFID-Transponder vorgesehen, an dem auslesbare Daten hinterlegt sind, die beispielsweise zur Identifikation des Benutzers oder dessen Zugangsbeziehungsweise Zugriffsrechte dienen. Hierzu ist der RFID-Transponder mit einer Antennenstruktur verbunden beziehungsweise weist selbst eine integrierte Antennenstruktur auf, über die Signale mit einem Lesegerät ausgetauscht werden können.

Aus EP2597723A1 ist ein Schmuckring bekannt, an dem ein RFID-Transponder in einer Ausnehmung eines Metallgrundkörpers aufgenommen ist. Dabei ist der RFID-Transponder nach außen hin wenigstens teilweise von einem am Metallgrundkörper angeordneten amorphen Zierelement abgedeckt.

WO2018/163876A1 beschreibt ein technisches Ringelement, wie ein Hohlrad, ein Dichtungsring oder ein Ringlager, an dem ferner ein RFID-Transponder vorgesehen ist. Dabei kann der RFID-Transponder Teil eines Transponderarrays sein, um über den Umfang des Ringes hinweg einen sicheren Datenaustausch zu ermöglichen.

US2015/042450A1 hat einen Fingerring zum Gegenstand, der für zwei unterschiedliche Gestensteuerungen zwei voneinander getrennt angeordnete Transponder aufweist. Dabei ist ein Transponder für einen öffentlichen Datenaustausch vorgesehen, während der andere Transponder für private Anwendungen verwendet werden soll.

US2017/373671A1 beschreibt ein allgemeines Verfahren zum Austausch von Daten zwischen einem Lesegerät und einem RFID-Transponder, wobei zum Ausgleich von Fertigungstoleranzen gewisse Frequenzverschiebungen vorgesehen sind.

Die Aufgabe der Erfindung ist es, bei einem gattungsgemäßen Schmuckgegenstand die Zuverlässigkeit beim Auslesen der gespeicherten Daten zu erhöhen.

Diese Aufgabe wird durch einen Schmuckgegenstand mit den Merkmalen des Anspruchs 1 gelöst. Dabei ist der RFID-Transponder Teil eines Transponderarrays mit wenigstens zwei weiteren RFID-Transpondern, die hierzu umlaufend an einer Umfangsseite des Metallgrundkörpers angeordnet sind. Durch die Mehrzahl an verwendeten RFID-Transpondern kann der Bereich des Schmuckgegenstandes, in dem ein Auslesen der an diesem hinterlegten Daten möglich ist, deutlich vergrößert werden. Auf diese Weise kann die Zuverlässigkeit der Auslesevorgänge deutlich erhöht werden, da eine störungsfreie Übergabe der auslesbaren Daten in verschiedenen Positionen beziehungsweise Ausrichtungen des Schmuckgegenstandes gegenüber dem betreffenden Lesegerät möglich ist. Insbesondere bei der Verwendung des Schmuckgegenstandes zur Freigabe eines Zugangs, wie beispielsweise durch Öffnen eines elektronischen Gebäude- oder Fahrzeugschlosses, oder eines Zugriffs auf ein EDV-System, wie beispielsweise über ein mit einem Computerarbeitsplatz verbundenes Lesegerät, können dadurch Fehlfunktionen vermieden werden. Durch die umlaufend angeordneten RFID-Transponder kann der Schmuckgegenstand dabei rundherum und somit beispielsweise im Falle eines Fingerringes, Armreifs oder ringförmigen Kettenanhängers unabhängig von seiner Drehstellung ausgelesen werden. Zudem weist das Transponderarray hierbei zwischen zwei benachbarten RFID-Transpondern, insbesondere jeweils zwischen allen benachbarten RFID-Transpondern, einen Abstand von zwischen 2 und 6 mm auf, wodurch unabhängig von der Winkelposition der betreffenden RFID-Transponder gegenüber dem Auslesegerät eine stabile Datenübertragung sichergestellt werden kann, ohne dass wesentliche gegenseitige Störungen der RFID Transponder auftreten. Darüber hinaus sind die RFID-Transponder wenigstens teilweise durch ein nichtmetallisches Material abgedeckt, wobei das nichtmetallische Material wenigstens teilweise durch eine Karbonfaserstruktur gebildet ist. Hierdurch ist es möglich, die RFID-Transponder beziehungsweise deren Antennenstrukturen zumindest weitestgehend uneinsehbar an dem Schmuckgegenstand anzubringen, ohne dass es zu wesentlichen Störungen beim Auslesen der gespeicherten Daten kommt. Die nichtmetallischen Materialien können dabei als gestalterisches Element genutzt werden, so dass das Design und der wertige Gesamteindruck des Schmuckgegenstandes trotz des daran aufgenommenen Transponderarrays erhalten werden kann. Zudem kann ein besonders wirksamer Schutz der RFID-Transponder gegenüber mechanisch oder chemisch wirkenden Beaufschlagungen zur Verfügung gestellt werden, die beispielsweise durch Stöße, Verkantungen oder eintretende Flüssigkeiten hervorgerufen werden.

Hierzu sind die auslesbaren Daten an den weiteren RFID-Transpondern vorteilhafterweise redundant hinterlegt, so dass die betreffenden Daten bei fehlender Auslesbarkeit eines einzelnen oder mehrerer RFID-Transponder des Transponderarrays durch die übrigen RFID-Transponder zur Verfügung gestellt werden können.

Zudem ist es günstig, wenn die RFID-Transponder wenigstens teilweise als passive Transponder ausgebildet sind, so dass diese ohne eigene Stromversorgung und somit zeitlich nahezu unbegrenzt zur Verfügung stehen, um nach Aktivierung durch ein elektromagnetisches Feld die auslesbaren Daten übergeben zu können.

Von Vorteil ist es ferner, wenn die RFID-Transponder ausschließlich oder wenigstens teilweise eine in ein Chipgehäuse intergierte Nahfeldantenne aufweisen. Derartige Antennen können dabei besonders leicht in das Gesamterscheinungsbild des Schmuckgegenstandes eingebunden beziehungsweise verborgen werden, um den optischen Eindruck und die Wertigkeit des Schmuckgegenstandes nicht zu beeinträchtigen. Zudem kann durch die ausschließliche Verwendung von Nahfeldantennen, die lediglich in einem Abstand von insbesondere unter 2 cm ein Auslesen der RFID-Transponder ermöglichen, ein Auslesen durch unberechtigte Dritte beziehungsweise eine unbeabsichtigte Zurverfügungstellung der auslesbaren Daten vermieden werden.

Zusätzliche oder alternativ hierzu ist es günstig, wenn das Transponderarray wenigstens eine Fernfeldantenne mit einer Materiallänge von insgesamt wenigstens 8,5 cm aufweist. Hierdurch können die am Schmuckgegenstand abgelegten Daten auch über einen Abstand von mehr als 2 cm hinweg zuverlässig übertragen werden. Dabei kann insbesondere in einem Frequenzbereich von 850 bis 950 MHz eine besonders gute Sende- und Empfangsleistung gewährleistet werden. Die Fernfeldantenne kann hierzu an einer Außenseite des Schmuckgegenstandes in dessen Design integriert werden, wie beispielsweise durch wellenförmige Einlassung in dessen Oberfläche oder durch von der Oberfläche in gestalterischer Form abstehende Abschnitte. Alternativ hierzu kann die Fernfeldantenne auch ausklappbar am Schmuckgegenstand gehalten sein.

In jedem Fall sind die RFID-Transponder vorzugsweise kontaktfrei beabstandet zum Metallgrundkörper gehalten, wodurch eine höhere Sende- und Empfangsleistung und dadurch eine besonders stabile Übergabe der auslesbaren Daten vom Schmuckgegenstand an das Lesegerät gewährleistet werden kann.

Dabei ist es günstig, wenn das nichtmetallische Material wenigstens teilweise durch eine einen Lack oder eine Keramik gebildet ist. Hierdurch kann die Verminderung der Sende- und Empfangsleistung der RFID-Transponder durch das abdeckende Material auf ein Minimum begrenzt werden. Zudem kann durch die Verwendung dieser Materialien ein besonders wirksamer Schutz der RFID-Transponder gegenüber mechanisch oder chemisch wirkenden Beaufschlagungen zur Verfügung gestellt werden, die beispielsweise durch Stöße, Verkantungen oder eintretende Flüssigkeiten hervorgerufen werden.

Alternativ oder zusätzlich hierzu kann das nichtmetallische Material vorteilhafterweise wenigstens teilweise durch Schmucksteine gebildet sein, die aus einem kristallinen oder amorphen Material gebildet sind. Insbesondere können die Schmucksteine durch ein monokristallines Material gebildet sein, insbesondere durch Zirkonia. Durch die Verwendung von kristallinen oder amorphen Steinen beziehungsweise von ZirkoniaSteinen können die verwendeten RFID-Transponder auch bei hochwertigen Schmuckgegenständen, wie beispielsweise mit Edelsteinen besetzte Edelmetallringen, besonders unauffällig abgedeckt und integriert werden.

Ferner wird die oben genannte Aufgabe durch ein Verfahren zur Herstellung eines ringförmigen Schmuckgegenstandes in einer der oben genannten Ausführungsformen gelöst, bei dem in einem ersten Schritt die RFID-Transponder am Metallgrundkörper positioniert und befestigt werden. In einem zweiten Schritt werden die am Metallgrundkörper befestigten RFID-Transponder in ein Karbonfasermaterial eingehüllt, wobei in einem dritten Schritt das Karbonfasermaterial mit Hitze beaufschlagt wird, um die RFID-Transponder in das Karbonfasermaterial einzubacken. Durch diese Verfahrensweise kann das Transponderarray besonders stabil und dauerhaft geschützt am Schmuckgegenstand aufgenommen werden. Durch die Verwendung des abdeckenden Karbonfasermaterials kann die Beeinträchtigung der Sende- und Empfangsleistung der RFID-Transponder dabei auf ein Minimum reduziert werden, so dass die an diesen abgelegten Identifikationsdaten störungsfrei ausgelesen werden können.

Vorteilhafterweise werden die RFID-Transponder im ersten Schritt unter Zwischenlage einer Kleberschicht am Metallgrundkörper festgeklebt. Hierdurch können die RFID-Transponder während des Einbackens des Karbonfasermaterials exakt in ihrer vorbestimmten Position gehalten werden. Zudem kann auf diese Weise die gewünschte Beabstandung der RFID-Transponder gegenüber dem Metall des Schmuckgegenstandes hergestellt werden, um eine mögliche Störung der Sende- und Empfangsleistung durch das Metall zu minimieren.

Ferner ist es günstig, wenn das im zweiten Schritt verwendete Karbonfasermaterial bandförmig ausgebildet ist, um bei einfacher Herstellung eine stabile und geschlossene Abdeckung der RFID-Transponder sicherstellen zu können.

Vorteilhafterweise werden die RFID-Transponder vor dem zweiten Schritt zusätzlich in ein Aerogel eingebettet. Durch die extrem wärmedämmenden Materialeigenschaften von Aerogel können die RFID-Transponder während des Einbackens des Karbonfasermaterials zuverlässig gegenüber schädlichen Temperaturanstiegen und/oder Temperaturgradienten geschützt werden.

Ferner wird die oben genannte Aufgabe durch ein Verfahren zum Betrieb einer Ausleseanordnung gelöst, die einen ringförmigen Schmuckgegenstand in einer der oben genannten Ausführungsformen und ein Auslesegerät aufweist. Bei diesem Betriebsverfahren wird in einem ersten Schritt von einer Sendeeinrichtung des Auslesegerätes ein Aktivierungssignal mit einer Sende- und Empfangsfrequenz an den Schmuckgegenstand gesendet. In einem zweiten Schritt werden dann die auslesbaren Daten vom Schmuckgegenstand an eine Empfangseinrichtung des Auslesegerätes übergeben. Dabei ist vorgesehen, dass das Senden des Aktivierungssignals nacheinander mit unterschiedlichen Sende- und Empfangsfrequenzen erfolgt, die hierzu beispielsweise in Form von Tabellen am Auslesegerät hinterlegt sind und bei jedem Auslesevorgang in kurzer Zeit nacheinander aktiviert werden. Auf diese Weise ist es möglich, die RFID-Transponder verschiedener Schmuckgegenstände mit einem einzigen, gleichbleibend konfigurierten Auslesegerät sicher auslesen zu können, auch wenn diese aufgrund ihrer Unterschiede in Form und Material gegenseitige Frequenzverschiebungen verursachen.

Die Übergabe der auslesbaren Daten erfolgt dabei in Abhängigkeit einer vorgegebenen zeitlichen Positionierung des Schmuckgegenstandes in einem Empfangsbereich des Auslesegerätes. Beispielsweise kann die vorgegebene zeitliche Positionierung dabei eine bestimmte Anzahl oder eine bestimmte Abfolge von kurzen und langen Positionierungen im Empfangsbereich beinhalten. In jedem Fall kann durch eine derartige zusätzliche Codierung eine zusätzliche Sicherung der abgelegten Daten zur Verfügung gestellt werden, wie beispielsweise für den Fall, dass sich der Schmuckgegenstand im Besitz einer unberechtigten Person befindet.

In einer besonders vorteilhaften Ausführungsform ist das Auslesegerät mit einer elektronischen und/oder mechanischen Sicherungseinrichtung verbunden, wie beispielsweise einem elektronischen Schloss eines Fahrzeugs oder eines Gebäudes oder einer Freigabeeinrichtung eines Datenverarbeitungssystems. Hierdurch kann der Schmuckgegenstand zur sicheren Identifikation und Authentifizierung des Benutzers verwendet werden, um den Zutritt zu einem gesicherten Bereich zu erlangen. Durch die Verwendung des Schmuckgegenstandes als Träger des Transponderarrays kann der Benutzer die als Schlüssel fungierenden auslesbaren Daten dabei in besonders komfortabler Weise mit sich führen.

Es wird darauf hingewiesen, dass alle oben beschriebenen Merkmale des erfindungsgemäßen Gegenstandes untereinander austauschbar beziehungsweise kombinierbar sind, sofern ein Austausch oder eine Kombination derselben aus technischen Gründen nicht ausgeschlossen ist.

In den Figuren ist eine beispielhafte Ausführungsform der Erfindung dargestellt. Es zeigen:
- Figur 1: eine perspektivische Ansicht einer erfindungsgemäßen Ausleseanordnung bei Übergabe auslesbarer Daten von einem Schmuckgegenstand an ein Auslesegerät,
- Figur 2A: eine perspektivische Ansicht eines Metallgrundkörpers des Schmuckgegenstandes gemäß Figur 1 während eines ersten Herstellungsschrittes,
- Figur 2B: eine vergrößerte geschnittene Ansicht eines oberen Abschnittes des Metallgrundkörpers gemäß Figur 2A nach Anbringung eines RFID-Transponders,
- Figur 2C: eine perspektivische Ansicht des Metallgrundkörpers gemäß Figur 2A am Ende des ersten Herstellungsschrittes,
- Figur 2D: eine perspektivische Ansicht des Metallgrundkörpers gemäß Figur 2B nach Anbringung eines Aerogels,
- Figur 2E: eine perspektivische Ansicht des Metallgrundkörpers gemäß Figur 2D während eines zweiten Herstellungsschrittes,
- Figur 2F: eine perspektivische Ansicht des Schmuckgegenstandes gemäß Figur 1 am Ende eines dritten Herstellungsschrittes,
- Figur 3: eine perspektivische Ansicht des Schmuckgegenstandes in einer alternativen Ausführungsform unter Verwendung eines monokristallinen Materials,
- Figur 4: eine perspektivische Ansicht des Schmuckgegenstandes in einer weiteren alternativen Ausführungsform unter Verwendung einer integrierten Fernfeldantenne,
- Figur 5: eine perspektivische Ansicht des Schmuckgegenstandes in einer weiteren alternativen Ausführungsform unter Verwendung einer vom Metallgrundkörper abstehenden Fernfeldantenne und
- Figur 6: eine perspektivische Ansicht des Schmuckgegenstandes in einer weiteren alternativen Ausführungsform unter Verwendung einer klappbaren Fernfeldantenne.

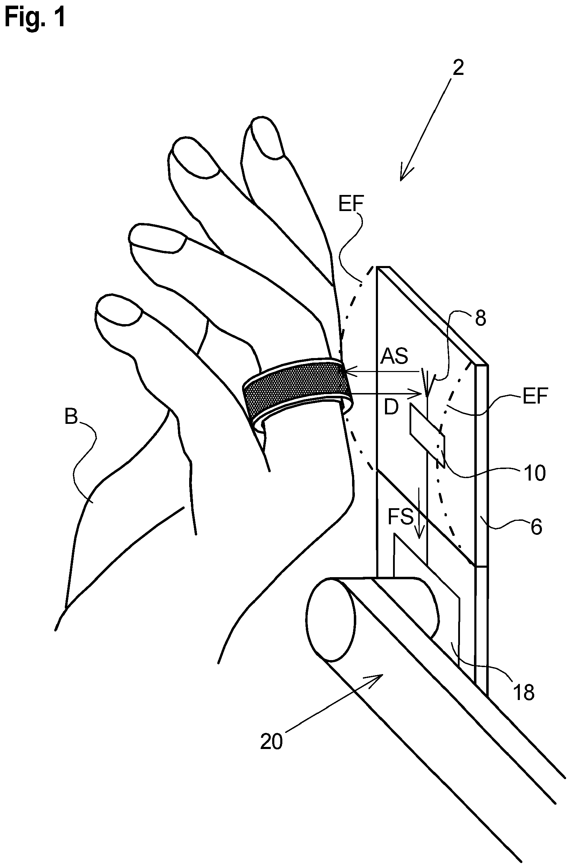

Fig. 1 zeigt eine Ausleseanordnung 2 mit einem Schmuckgegenstand 4 in Form eines am Finger eines Benutzers B angelegten Fingerringes und einem Auslesegerät 6. Dieses weist Sende- und Empfangsmittel 8 auf, die mit einer Ausleseelektronik 10 verbunden sind. Mittels der Sende- und Empfangsmittel 8 kann dabei in einem Nahbereich des Auslesegerätes 6 ein elektromagnetisches Feld EF aufgebaut werden. Zudem können über die Sende- und Empfangsmittel 8 Aktivierungssignale AS an den Schmuckgegenstand 4 gesendet werden.

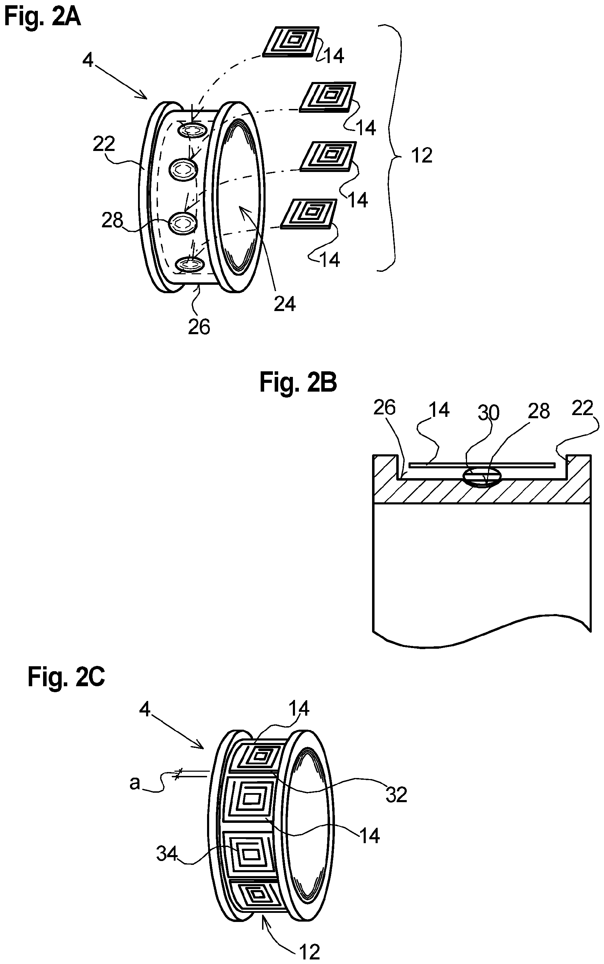

Wie insbesondere aus den Figuren 2A bis 2C zu entnehmen ist, weist der Schmuckgegenstand zur induktiven Stromerzeugung und zum Empfang der Aktivierungssignale AS ein Transponderarray 12 mit mehreren passiven RFID-Transpondern 14 und einem Speicherchip 16 auf, die an einem Metallgrundkörper 22 gehalten sind. An den Transpondern 14 sind dabei jeweils auslesbare Daten D hinterlegt, wie insbesondere Identifikationsdaten, Passwörter beziehungsweise sonstige Freigabecodes und Zutritts-/Zugriffsberechtigungen.

Durch Positionierung der RFID-Transponder 14 durch einen Träger beziehungsweise Benutzer B des Schmuckgegenstandes 4 innerhalb des elektromagnetischen Feldes EF, gemäß Figur 1, können dies RFID-Transponder 14 mit Energie versorgt und aktiviert werden, wobei sie die an ihrem Speicherchip 16 hinterlegten Daten D übergeben, so dass diese wiederum von den Sende- und Empfangsmitteln 8 eingelesen und an die Ausleseelektronik 10 abgegeben werden können. Die auslesbaren Daten D sind dabei in identischer Form an mehreren oder allen RFID-Transpondern 14 des Transponderarrays 12 hinterlegt, so dass diese auch bei fehlender Einlesbarkeit oder Ausfall einzelner RFID-Transponder 14 redundant zur Verfügung stehen und somit von wenigstens einem weiteren RFID-Transponder 14 an das Auslesegerät 6 übergeben werden können.

Die Ausleseelektronik 10 weist eine Analysesoftware auf, mittels der anhand der vom jeweiligen RFID-Transponder 14 eingehenden Daten D ein Zutritts- beziehungsweise Zugriffsrecht des Benutzers B des Schmuckgegenstandes 4 überprüft werden kann. Sofern ein entsprechendes Zutritts- beziehungsweise Zugriffsrecht besteht, wird ein Freigabesignal FS an eine Elektronik 18 einer Sicherungseinheit 20 abgegeben, die beispielsweise, wie dargestellt, durch ein Schloss eines Gebäudes oder eines Fahrzeugs gebildet ist. Alternativ hierzu kann die Sicherungseinheit 20 beispielsweise auch in ein Datenverarbeitungssystem integriert sein, um die Benutzung von Daten und/oder Programmen auf einen berechtigten Personenkreis einschränken zu können.

Der Aufbau beziehungsweise das Verfahren zur Herstellung des ringförmigen Schmuckgegenstandes 4 wird nachfolgend anhand der Figuren 2A bis 2F beschrieben:
Wie aus Figur 2A zu entnehmen ist, weist der Metallgrundkörper 22, der beispielsweise aus einer Edelmetalllegierung wie insbesondere einer Gold-, Silber- oder Platinlegierung hergestellt ist, eine Aufnahmeöffnung 24 zum Anlegen des Schmuckgegenstandes 4 am Finger des Benutzers B auf. In einem ersten Herstellungsschritt wird das aus mehreren RFID-Transpondern 14 bestehende Transponderarray 12 umlaufend um die Aufnahmeöffnung 24 herum an der äußeren Umfangsfläche 26 des Metallgrundkörpers 22 befestigt. Hierzu sind in die Umfangsfläche 26 beispielsweise Vertiefungen 28 eingelassen, in die gemäß Figur 2B ein Verbindungsmittel 30, wie beispielsweise ein Kleber oder ein Lot, eingebracht werden kann, das den betreffenden RFID-Transponder 14 gegenüber der Umfangsfläche 26 fixiert.

Wie aus Figur 2B zu entnehmen ist, werden die RFID-Transponder 14 dabei unter Zwischenlage des Verbindungsmittels 30 beabstandet beziehungsweise kontaktfrei gegenüber dem Metallgrundkörper 22 gehalten, um eine Beeinträchtigung der Sende- und Empfangsleistung des RFID-Transponders 14 durch den Metallgrundkörper 22 zu minimieren. Zudem weisen die jeweils benachbart angeordneten RFID-Transponder 14 gemäß Figur 2C auch zueinander einen Abstand a von 2 bis 6 mm auf, um einerseits eine gegenseitige Störung zu minimieren und andererseits eine geschlossen umlaufende Übertragung der auslesbaren Daten D zu gewährleisten.

Wie insbesondere aus Figur 2C zu entnehmen ist, weisen die RFID-Transponder 14 des Transponderarrays 12 jeweils eine in ein Chipgehäuse 32 integrierte Antennenstruktur auf, die als Nahfeldantenne 34 mit einer Reichweite von bis zu 2 cm fungiert.

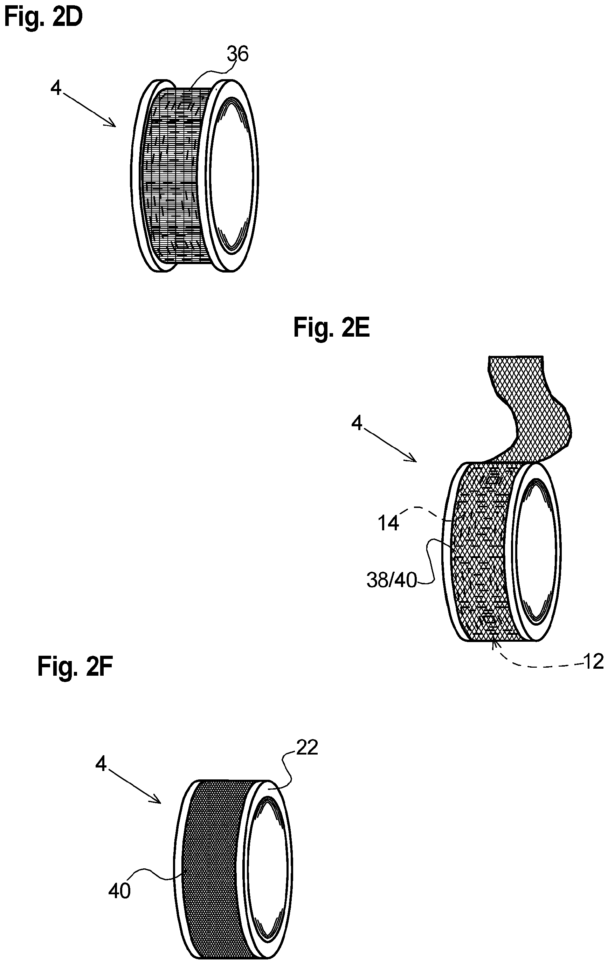

Zum besonderen Schutz der RFID-Transponder 14 insbesondere gegenüber Hitzeeinwirkungen während des weiteren Herstellungsverfahrens und/oder während der Benutzung des Schmuckgegenstandes 4 können diese, wie in Figur 2D dargestellt, zusätzlich mit einem Aerogel 36 umhüllt beziehungsweise in dieses eingebettet werden.

In einem zweiten Herstellungsschritt werden die RFID-Transponder 14 dann gemäß Figur 2E mit einem nichtmetallischen Material 38 abgedeckt, das insbesondere zur Gestaltung des Schmuckgegenstandes 4 beziehungsweise zum wenigstens teilweise Verhüllen und zum Schutz der RFID-Transponder 14 dient. Hierzu können beispielsweise Lacke, Keramikmaterialien oder Kunststoffe verwendet werden, die einerseits einen wertigen Eindruck des Schmuckgegenstandes 4 unterstützen und gleichzeitig einen ungestörten Signalaustausch des Transponderarrays 12 mit dem Auslesegerät 6 gewährleisten. In der in Figur 2E dargestellten Ausführungsform ist das nichtmetallische Material 38 durch eine bandförmige Karbonfaserstruktur 40 gebildet, die unter Zwischenlage des umlaufenden Transponderarrays 12 an der äußeren Umfangsfläche 26 des Metallgrundkörpers 22 befestigt wird.

In einem dritten Herstellungsschritt wird der Metallgrundkörper 22 mit der unter Zwischenlage des Transponderarrays 12 angebrachten Karbonfaserstruktur 40 mit einer Temperatur von zwischen 180 und 220° beaufschlagt, um die einzelnen RFID-Transponder 14 in die sich bei diesen Temperaturen viskos verformende Karbonfaserstruktur 40 einzubetten. Das zwischen dem Transponderarray 12 und der Karbonfaserstruktur 40 vorgesehene Aerogel 36 verhindert dabei einen schädlichen Temperaturanstieg an den RFID-Transpondern 14. Nach einer zusätzlichen Nachbearbeitung kann auf diese Weise der fertige Schmuckgegenstand 4 mit einer nach außen geglätteten Karbonfaserstruktur 40 gemäß Figur 2F gewonnen werden.

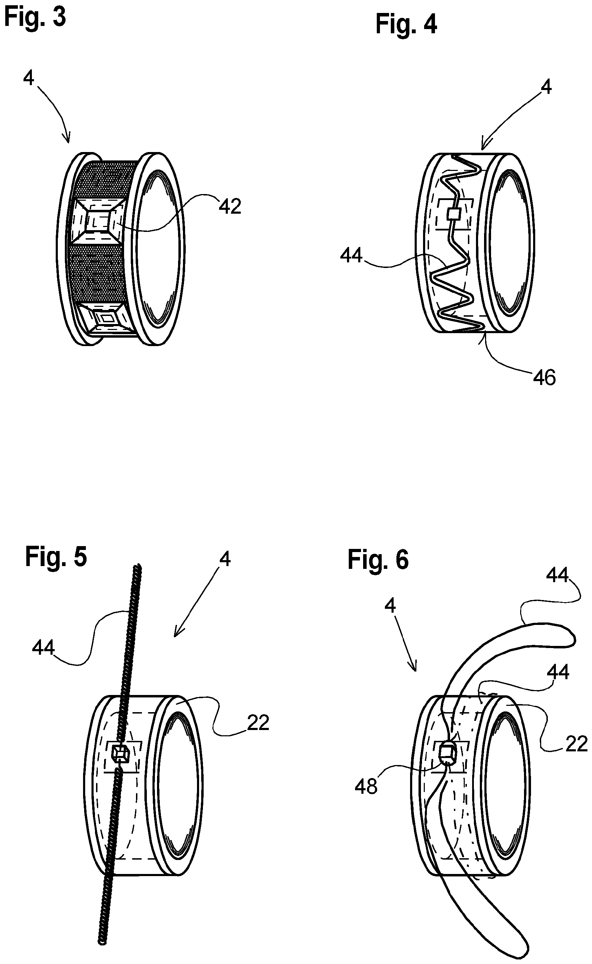

Alternativ zu der Ausführungsform nach Figur 2F kann das nichtmetallische Material, gemäß Figur 3, wenigstens abschnittsweise auch durch einen amorphen oder kristallinen Schmuckstein, insbesondere aus einem monokristallinen Material 42 gebildet sein, wie beispielsweise in Form von geschliffenen Zirkoniasteinen.

In einer weiteren alternativen Ausführungsform kann der Schmuckgegenstand 4 alternativ oder zusätzlich zur integrierten Nahfeldantenne 34 des Transponderarrays 12 nach Figur 2B auch eine Fernfeldantenne 44 mit einer Reichweite von mehr als 2 cm aufweisen, die sich hierzu beispielsweise über eine Materiallänge von wenigstens 8,5 cm erstreckt. Wie in Figur 4 dargestellt kann die Fernfeldantenne 44 hierzu beispielsweise in gewundener beziehungsweise geschwungener Form in eine Außenoberfläche 46 des Schmuckgegenstandes 4 eingelassen sein und dabei selbst als gestalterisches Element wirken.

Alternativ zu dieser integrierten Aufnahme kann die Fernfeldantenne 44 gemäß den Figuren 5 und 6 auch vom Metallgrundkörper 22 abstehen, wobei die abstehende Position entweder dauerhaft oder durch einen beliebigen Klappmechanismus 48 auch nur temporär vorgesehen sein kann, um die Fernfeldantenne 44 bedarfsweise auszuklappen und ansonsten in einer Anlegeposition am Metallgrundkörper 22 zu halten, wie sie in Figur 6 durch strichpunktierte Linien dargestellt ist.

In jedem Fall wird bei der Verwendung des Schmuckgegenstandes 4 dieser, gemäß Figur 1, in dem elektromagnetischen Feld EF des Auslesegerätes 6 positioniert, so dass wenigstens einer der daran vorgesehenen RFID-Transpondern 14 durch das Aktivierungssignal AS aktiviert werden kann. Hierdurch sendet der betreffende RFID-Transponder 14 die an seinem Speicherchip 16 hinterlegten Daten D aus, die wiederum vom Auslesegerät 6 empfangen und verarbeitet werden können.

Um bei diesem Signalaustausch auch Frequenzverschiebungen abdecken zu können, die durch die individuelle Form des Schmuckgegenstandes 4 hervorgerufen sein können, erfolgt das Senden des Aktivierungssignals AS dabei nacheinander mit unterschiedlichen Sende- und Empfangsfrequenzen, die in der Ausleseelektronik 10 hinterlegt sind. Die hinterlegten Frequenzen decken dabei vorzugsweise alle für eine Herstellungsserie des Schmuckgegenstandes 4 zu erwartenden Frequenzverschiebungen ab.

Ferner kann an der Ausleseelektronik 10 eine zeitliche Codierung vorgesehen werden, die die die Weitergabe des Freigabesignals FS von einer bestimmten zeitlichen Positionierung des Schmuckgegenstandes 4 im elektromagnetischen Feld EF des Auslesegerätes 6 abhängig macht. Hierdurch kann das Öffnen beziehungsweise Freigeben der elektronischen und/oder mechanischen Sicherungseinrichtung 20 neben der zur Verfügungstellung der auf dem Schmuckgegenstand 4 hinterlegten Daten auch von einer codierten Durchführung des Auslesevorganges abhängig gemacht werden, die lediglich dem rechtmäßigen Besitzer des Schmuckgegenstandes 4 bekannt ist.

Es wird darauf hingewiesen, dass alle oben beschriebenen Elemente und Merkmale der verschiedenen Ausführungsformen des erfindungsgemäßen Gegenstandes untereinander austauschbar beziehungsweise kombinierbar sind, sofern ein Austausch oder eine Kombination derselben aus technischen Gründen nicht ausgeschlossen ist.

## Patentansprüche

1. Ringförmiger Schmuckgegenstand (4)
mit einem Metallgrundkörper (22), der eine Aufnahmeöffnung (24) bildet, und
einem RFID-Transponder (14), an dem auslesbare Daten (D) hinterlegt sind und der mit einer Antennenstruktur verbunden ist, über die Signale mit einem Lesegerät austauschbar sind,
**dadurch gekennzeichnet, dass** der RFID-Transponder (14) Teil eines Transponderarrays (12) mit wenigstens zwei weiteren RFID-Transpondern (14) ist, die an einer Umfangsfläche (26) des Metallgrundkörpers (22) umlaufend angeordnet sind, und das Transponderarray (12) dabei zwischen zwei benachbarten RFID-Transpondern (14) einen Abstand (a) von 2 bis 6 mm aufweist und die RFID-Transponder (14) wenigstens teilweise durch ein nichtmetallisches Material (38) abgedeckt sind, das wenigstens teilweise durch eine Karbonfaserstruktur gebildet ist.

2. Ringförmiger Schmuckgegenstand nach Anspruch 1, **dadurch gekennzeichnet, dass** die auslesbaren Daten (D) an den weiteren RFID-Transpondern (14) redundant hinterlegt sind.

3. Ringförmiger Schmuckgegenstand nach Anspruch 1 oder 2, **dadurch gekennzeichnet, dass** die RFID-Transponder (14) wenigstens teilweise als passive Transponder ausgebildet sind.

4. Ringförmiger Schmuckgegenstand nach einem der Ansprüche 1 bis 3, **dadurch gekennzeichnet, dass** die RFID-Transponder (14) wenigstens teilweise eine in ein Chipgehäuse (32) intergierte Nahfeldantenne (34) aufweisen.

5. Ringförmiger Schmuckgegenstand nach einem der Ansprüche 1 bis 4, **dadurch gekennzeichnet, dass** das Transponderarray (12) wenigstens eine Fernfeldantenne (44) aufweist.

6. Ringförmiger Schmuckgegenstand nach einem der Ansprüche 1 bis 5, **dadurch gekennzeichnet, dass** die RFID-Transponder (14) kontaktfrei beabstandet zum Metallgrundkörper (22) gehalten sind.

7. Ringförmiger Schmuckgegenstand nach einem der Ansprüche 1 bis 6, **dadurch gekennzeichnet, dass** das nichtmetallische Material (38) wenigstens teilweise durch einen Lack oder eine Keramik gebildet ist.

8. Ringförmiger Schmuckgegenstand nach Anspruch 7, **dadurch gekennzeichnet, dass** das nichtmetallische Material (38) wenigstens teilweise durch Schmucksteine gebildet ist.

9. Verfahren zur Herstellung eines ringförmigen Schmuckgegenstandes nach einem der Ansprüche 1 bis 8, **dadurch gekennzeichnet, dass**
in einem ersten Schritt die RFID-Transponder (14) am Metallgrundkörper (22) positioniert und befestigt werden,
in einem zweiten Schritt die am Metallgrundkörper (22) befestigten RFID-Transponder (14) in ein Karbonfasermaterial eingehüllt werden und
in einem dritten Schritt das Karbonfasermaterial mit Hitze beaufschlagt wird, um die RFID-Transponder (14) in das Karbonfasermaterial einzubacken.

10. Herstellungsverfahren nach Anspruch 9, **dadurch gekennzeichnet, dass** die RFID-Transponder (14) im ersten Schritt unter Zwischenlage einer Kleberschicht () am Metallgrundkörper (22) festgeklebt werden.

11. Herstellungsverfahren nach Anspruch 9 oder 10, **dadurch gekennzeichnet, dass** das im zweiten Schritt verwendete Karbonfasermaterial bandförmig ausgebildet ist.

12. Herstellungsverfahren nach einem der Ansprüche 9 bis 11, **dadurch gekennzeichnet, dass** die RFID-Transponder (14) vor dem zweiten Schritt in ein Aerogel (36) eingebettet werden.

13. Verfahren zum Betrieb einer Ausleseanordnung mit einem ringförmigen Schmuckgegenstand nach einem der Ansprüche 1 bis 8 und einem Auslesegerät (6), bei dem
in einem ersten Schritt von einer Sendeeinrichtung des Auslesegerätes (6) ein Aktivierungssignal (AS) mit einer Sende- und Empfangsfrequenz an den Schmuckgegenstand (4) gesendet wird,
in einem zweiten Schritt die auslesbaren Daten (D) vom Schmuckgegenstand (4) an eine Empfangseinrichtung des Auslesegerätes (6) übergeben werden,
**dadurch gekennzeichnet, dass** das Senden des Aktivierungssignals (AS) nacheinander mit unterschiedlichen Sende- und Empfangsfrequenzen erfolgt und die Übergabe der auslesbaren Daten (D) in Abhängigkeit einer vorgegebenen zeitlichen Positionierung des Schmuckgegenstandes (4) in einem Empfangsbereich des Auslesegerätes (6) erfolgt..

14. Betriebsverfahren nach Anspruch 13, **dadurch gekennzeichnet, dass** das Auslesegerät (6) mit einer elektronischen und/oder mechanischen Sicherungseinrichtung (20) verbunden ist.

## Claims

1. A ring-shaped piece of jewelry (4)
having a metal base (22) which forms a receiving opening (24), and
an RFID transponder (14), at which data (D) that can be read out are stored and which is connected to an antenna structure, by means of which the signals can be exchanged with a reading device,
**characterized in that** the RFID transponder (14) is part of a transponder array (12) having at least two further RFID transponders (14), which extend peripherally on a peripheral surface (26) of the metal base body (22), and the transponder array (12) has a distance (a) of 2 to 6 mm between two adjacent RFID transponders (14) and the RFID transponders (14) are at least partially covered by a non-metallic material (38), which is formed at least partially by a carbon fiber structure.

2. The ring-shaped piece of jewelry according to claim 1, **characterized in that** the data (D) that can be read out are redundantly stored at the further RFID transponders (14).

3. The ring-shaped piece of jewelry according to claim 1 or 2, **characterized in that** the RFID transponders (14) are embodied at least partially as passive transponders.

4. The ring-shaped piece of jewelry according to any of claims 1 to 3, **characterized in that** the RFID transponders (14) have a near-field antenna (34) at least partially integrated in a chip housing (32).

5. The ring-shaped piece of jewelry according to any of claims 1 to 4, **characterized in that** the transponder array (12) has at least one far-field antenna (44).

6. The ring-shaped piece of jewelry according to any of claims 1 to 5, **characterized in that** the RFID transponders (14) are held in contact-free manner spaced apart from the metal base body (22).

7. The ring-shaped piece of jewelry according to any of claims 1 to 6, **characterized in that** the non-metallic material (38) is formed at least partially by a lacquer or a ceramic.

8. The ring-shaped piece of jewelry according to claim 7, **characterized in that** the non-metallic material (38) is formed at least partially by semi-precious stones.

9. A method for manufacturing a ring-shaped piece of jewelry according to any of claims 1 to 8, **characterized in that**
in a first step the RFID transponders (14) are positioned and fastened on the metal base body (22),
in a second step the RFID transponders (14) fastened on the metal base body (22) are cased in a carbon fiber material and
in a third step the carbon fiber material is treated with heat in order to bake the RFID transponders (14) into the carbon fiber material.

10. The production method according to claim 9, **characterized in that** the RFID transponders (14) are stuck on the metal base body (22) in a first step using an adhesive layer in between.

11. The production method according to claim 9 or 10, **characterized in that** the carbon fiber material used in the second step is embodied in the shape of a band.

12. The production method according to any of claims 9 to 11, **characterized in that** the RFID transponders (14) are embedded in an aerogel (36) prior to the second step.

13. A method for operating a reading assembly having a ring-shaped piece of jewelry according to any of claims 1 to 8 and a reading device (6), in which
in a first step an activation signal (AS) with a transmission and reception frequency is transmitted from a transmission device of the reading device (6) to the piece of jewelry (4),
in a second step the data (D) that can be read out are transferred from the piece of jewelry (4) to a receiving device of the reading device (6),
**characterized in that** the sending of the activation signal (AS) occurs successively at different transmission and reception frequencies and the transfer of the data (D) that can be read out occurs as a function of a predefined chronological positioning of the piece of jewelry (4) in a receiving region of the reading device (6).

14. An operating method according to claim 13, **characterized in that** the reading device (6) is connected to an electronic and/or mechanical backup device (20).

## Revendications

1. Bijou en forme d'anneau (4)
avec un corps de base métallique (22), qui forme une ouverture de réception (24), et
un transpondeur RFID (14), sur lequel des données lisibles (D) sont mises en mémoire et qui est relié à une structure d'antenne, par l'intermédiaire de laquelle des signaux peuvent être échangés avec un lecteur,
**caractérisé en ce que** le transpondeur RFID (14) fait partie d'un réseau de transpondeurs (12) avec au moins deux autres transpondeurs RFID (14), qui sont disposés de manière périphérique sur une surface circonférentielle (26) du corps de base métallique (22), et le réseau de transpondeurs (12) présente ce faisant entre deux transpondeurs RFID (14) voisins une distance (a) de 2 à 6 mm et les transpondeurs RFID (14) sont recouverts au moins en partie par un matériau non métallique (38), qui est formé au moins en partie par une structure de fibres de carbone.

2. Bijou en forme d'anneau selon la revendication 1, **caractérisé en ce que** les données lisibles (D) sont mises en mémoire de manière redondante sur les autres transpondeurs RFID (14) .

3. Bijou en forme d'anneau selon la revendication 1 ou 2, **caractérisé en ce que** les transpondeurs RFID (14) sont réalisés au moins en partie sous la forme de transpondeurs passifs.

4. Bijou en forme d'anneau selon l'une quelconque des revendications 1 à 3, **caractérisé en ce que** les transpondeurs RFID (14) présentent au moins en partie une antenne en champ proche (34) intégrée dans un boîtier de puce (32).

5. Bijou en forme d'anneau selon l'une quelconque des revendications 1 à 4, **caractérisé en ce que** le réseau de transpondeurs (12) présente au moins une antenne en champ lointain (44).

6. Bijou en forme d'anneau selon l'une quelconque des revendications 1 à 5, **caractérisé en ce que** les transpondeurs RFID (14) sont maintenus sans contact à distance du corps de base métallique (22).

7. Bijou en forme d'anneau selon l'une quelconque des revendications 1 à 6, **caractérisé en ce que** le matériau non métallique (38) est formé au moins en partie par un vernis ou une céramique.

8. Bijou en forme d'anneau selon la revendication 7, **caractérisé en ce que** le matériau non métallique (38) est formé au moins en partie par des pierres fines.

9. Procédé pour la fabrication d'un bijou en forme d'anneau selon l'une quelconque des revendications 1 à 8, **caractérisé en ce que**
dans une première étape les transpondeurs RFID (14) sont positionnés et fixés sur le corps de base métallique (22),
dans une deuxième étape les transpondeurs RFID (14) fixés sur le corps de base métallique (22) sont enveloppés dans un matériau en fibres de carbone et
dans une troisième étape le matériau en fibres de carbone est sollicité avec de la chaleur, afin de cuire les transpondeurs RFID (14) dans le matériau en fibres de carbone.

10. Procédé de fabrication selon la revendication 9, **caractérisé en ce que** les transpondeurs RFID (14) dans la première étape sont collés sur le corps de base métallique (22) avec interposition d'une couche adhésive.

11. Procédé de fabrication selon la revendication 9 ou 10, **caractérisé en ce que** le matériau en fibres de carbone utilisé dans la deuxième étape est réalisé en forme de bande.

12. Procédé de fabrication selon l'une quelconque des revendications 9 à 11, **caractérisé en ce que** les transpondeurs RFID (14) sont noyés dans un aérogel (36) avant la deuxième étape.

13. Procédé pour faire fonctionner un ensemble de lecture avec un bijou en forme d'anneau selon l'une quelconque des revendications 1 à 8 et un lecteur (6), selon lequel
dans une première étape un signal d'activation (AS) est envoyé avec une fréquence d'émission et de réception au bijou (4) par un dispositif d'émission du lecteur (6),
dans une deuxième étape les données lisibles (D) sont transmises par le bijou (4) à un dispositif de réception du lecteur (6),
**caractérisé en ce que** l'envoi du signal d'activation (AS) s'effectue successivement avec différentes fréquences d'émission et de réception et la transmission des données lisibles (D) s'effectue en fonction d'un positionnement temporel prédéfini du bijou (4) dans une zone de réception du lecteur (6) .

14. Procédé de fonctionnement selon la revendication 13, **caractérisé en ce que** le lecteur (6) est relié à un dispositif de sécurité (20) électronique et/ou mécanique.
